**Europäisches Patentamt**

**European Patent Office**

**Office européen des brevets**

(11) Numéro de publication: **0 220 769**
**B1**

(12) # FASCICULE DE BREVET EUROPÉEN

(45) Date de publication du fascicule du brevet:
**04.01.89**

(21) Numéro de dépôt: **86201815.7**

(22) Date de dépôt: **20.10.86**

(51) Int. Cl.⁴: **F 16 F 1/00,** C 04 B 35/52,
C 04 B 35/58, B 28 D 7/04,
B 23 D 57/00

(54) **Procédé pour la réalisation d'un ressort de type cylindrique utilisable aux hautes températures.**

(30) Priorité: **22.10.85 FR 8515653**

(43) Date de publication de la demande:
**06.05.87 Bulletin 87/19**

(45) Mention de la délivrance du brevet:
**04.01.89 Bulletin 89/1**

(84) Etats contractants désignés:
**DE FR GB IT NL**

(56) Documents cité:
**EP-A-0 039 491**
**EP-A-0 052 523**
**DE-A-1 912 363**
**FR-A-1 090 004**
**FR-A-2 330 510**
**FR-A-2 404 770**
**US-A-1 557 958**
**US-A-2 888 258**
**US-A-3 720 740**
**US-A-4 412 675**

(73) Titulaire: **Laboratoires d'Electronique et de Physique Appliquée L.E.P., 3, Avenue Descartes, F-94450 Limeil- Brévannes (FR)**
(84) Etats contractants désignés: **FR**

(73) Titulaire: **N.V. Philips' Gloeilampenfabrieken, Groenewoudseweg 1, NL- 5621 BA Eindhoven (NL)**
(84) Etats contractants désignés: **DE GB IT NL**

(72) Inventeur: **Latorre, Bernard Société Civile S.P.I.D., 209, rue de l'Université, F-75007 Paris (FR)**
Inventeur: **Foucher, Claude Société Civile S.P.I.D., 209, rue de l'Université, F-75007 Paris (FR)**

(74) Mandataire: **Landousy, Christian, Société Civile S.P.I.D. 209, Rue de l'Université, F-75007 Paris (FR)**

EP 0 220 769 B1

## Description

L'invention concerne un procédé pour la réalisation d'un ressort de type cylindrique qui présente des évidements non jointifs de hauteur h, réalisés dans un tube cylindrique creux selon des bandes, distantes entre elles de e, sensiblement perpendiculaires à l'axe du tube cylindrique creux, ces évidements étant répartis dans le tube selon une disposition hélicoïdale, chaque évidement étant constitué par un cylindre de hauteur h, dont la génératrice se déplace parallèlement à l'axe du tube sur une courbe fermée formée d'une partie du contour d'une section sensiblement droite du tube cylindrique creux, comprenant une portion des contours relatifs aux faces interne et externe du tube cylindrique creux, la courbe fermée subissant, pour deux évidements voisins, une rotation par rapport à l'axe du tube cylindrique creux.

Un ressort de ce type est connu du document FR-A-1 090 004 qui décrit un ressort hélicoïdal constitué par un barreau en un matériau élastique, percé axialement d'un trou longitudinal débouchant à l'une au moins des extrémités et dans lequel sont ménagées des entailles formant des fentes transversales qui débouchent dans ledit trou longitudinal, ces fentes étant décalées les unes par rapport aux autres, dans le sens longitudinal et périphérique, de manière à laisser subsister entre elles au moins une série de lames élastiques reliées entre elles en zigzag.

Un tel ressort est prévu pour être traité thermiquement avant usinage, afin d'éviter les déformations dues au traitement et d'obtenir des dimensions très précises et la possibilité d'usiner les extrémités, le tout avec des bonnes caractéristiques de qualité du matériau élastique. Ce ressort peut être réalisé en acier, en bronze, en superpolyamide, en caoutchouc, en effectuant une opération de fraisage de ces matériaux.

Or les températures de fonctionnement auxquelles peuvent opérer de tels ressorts sont nettement inférieures à 500°C et ceux-ci ne peuvent donc en aucun cas remplir la fonction de ressort aux hautes températures, par exemple atteindre des températures de fonctionnement supérieures à 1000°C.

D'autre part les applications qui nécessitent de disposer de ressorts opérant aux hautes températures sont par exemple la métallurgie des semi-conducteurs. Or dans une telle application le problème de la pollution du milieu dans lequel opèrent les ressorts est de la plus grande importance et les matériaux prévus par le brevet FR-A-1 090 004 ne sont pas adaptés à cet usage. Un changement de matériau s'impose et le choix doit être opéré parmi les matériaux réfractaires tels que le quartz, le nitrure de bore, le graphite. Mais l'opération de fraisage utilisée dans ce document ne permet pas de réaliser un élément élastique qui puisse répondre à la fonction d'un ressort. En effet, ces opérations de fraisage génèrent des microfractures principalement dans les zones où l'élasticité du matériau est sollicitée et des cassures des éléments obtenus apparaissent rendant l'élément ainsi réalisé impropre à toute fonction de ressort à haute température.

Le but de l'invention est donc de proposer un procédé de réalisation d'un véritable ressort utilisable aux hautes températures.

Pour cela l'invention telle définie dans le préambule est remarquable en ce que dans un tube cylindrique creux, en matériau réfractaire non métallique,

- on effectue une opération de sciage partiel du tube, selon une direction correspondant à une section sensiblement droite du tube, à l'aide d'une scie à fils, ayant au moins un fil, afin de réaliser au moins un évidement partiel du tube, le sciage partiel étant arrêté après avoir traversé la totalité de la partie creuse du tube, la largeur du fil correspondant sensiblement à la largeur de l'évidement recherchée,
- on déplace le tube par rapport au fil de la scie, selon une rotation par rapport à l'axe du tube d'un angle de 360°/n et une translation parallèlement à l'axe du tube, d'une distance T/n, où T représente la distance entre deux évidements consécutifs situés sur une même génératrice et n le nombre d'évidements à réaliser dans le tube sur la distance T,
- on répète l'opération de sciage puis l'opération de déplacement jusqu'à l'obtention d'un ressort en matériau réfractaire non métallique ayant le nombre d'évidements et la longueur recherchés.

Le matériau réfractaire non métallique peut être du quartz, du graphite ou du nitrure de bore. Préférentiellement la section droite du tube cylindrique creux est annulaire. Le rapport h/e peut être sensiblement égal à 1.

Dans la métallurgie des semi-conducteurs il est très souvent nécessaire d'effectuer des opérations de mouvement à l'intérieur d'une enceinte fermée dans laquelle règne un certain nombre d'équilibres de pression, de température, de composition chimique. La transmission de mouvements ou de forces s'avère difficile, et ceci bien qu'ils soient généralement de faibles amplitudes.

Pour traiter ce problème le ressort selon l'invention est réalisé préférentiellement dans un tube de quartz dont la section droite est annulaire. Les évidements sont ainsi réalisés selon une technique à froid qui n'apporte pas de perturbations telles que microfissures ou autres, la zone perturbée le long de la surface de découpe étant de très faible épaisseur. Ces évidements sont pratiqués sensiblement selon une section droite. Après avoir traversé la première face de la surface interne du tube cylindrique préférentiellement ils effleurent la seconde face.

Des évidements voisins sont placés à une distance e les uns des autres, décalés en rotation par rapport à l'axe du tube cylindrique, de sorte que tous les évidements réalisés dans le tube se succèdent selon une répartition hélicoïdale.

Plusieurs évidements sont donc placés sur une même génératrice à une distance T tel que $n = \frac{T}{h+e}$. Sur une distance T, il y a donc n évidements successifs qui sont décalés en rotation d'un angle $360°/n$.

Pour réaliser un tel ressort il est préférable d'utiliser une scie multifils dont les fils sont distants de T. On opère ainsi simultanément tous les évidements distants de T. Puis on tourne le tube de quartz sur son support d'un angle $360°/n$ et on effectue à nouveau tous les évidements distants de T. L'opération est effectuée pour les n rotations.

L'invention sera mieux comprise, à l'aide des figures suivantes, données à titre d'exemples non limitatifs, qui représentent:

la figure 1: une portion de ressort obtenu selon l'invention,

les figures 2A à 2F: une illustration du mécanisme de découpe d'un tube cylindrique creux et du ressort ainsi obtenu selon l'invention avec n = 3,

les figures 3A à 3C: une représentation simplifiée, d'une coupe, selon l'axe de symétrie du tube, d'un ressort selon l'invention,

la figure 4: une courbe de compression-extension en fonction de la force appliquée.

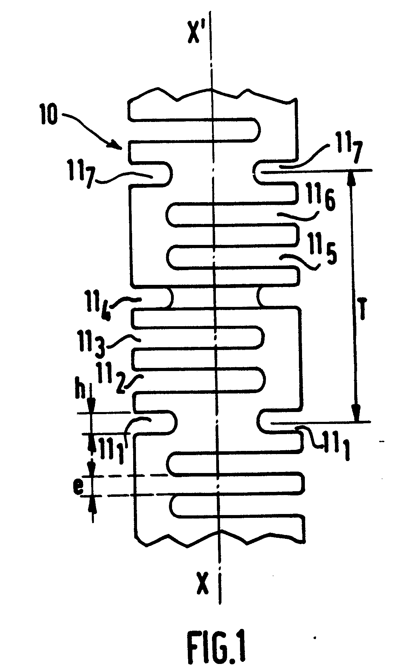

Sur la figure 1 est représenté un ressort 10 réalisé dans un tube cylindrique creux en quartz dans le cas d'un ressort ayant un pas à six évidements $11_1$ à $11_6$. Les évidements $11_1$ et $11_7$ sont analogues et sont distants d'un pas 7. Les évidements sont espacés de e et décalés en rotation par rapport à l'axe XX' d'un angle de $360°/6 = 60°$ dans l'exemple représenté la largeur de chaque évidement est h.

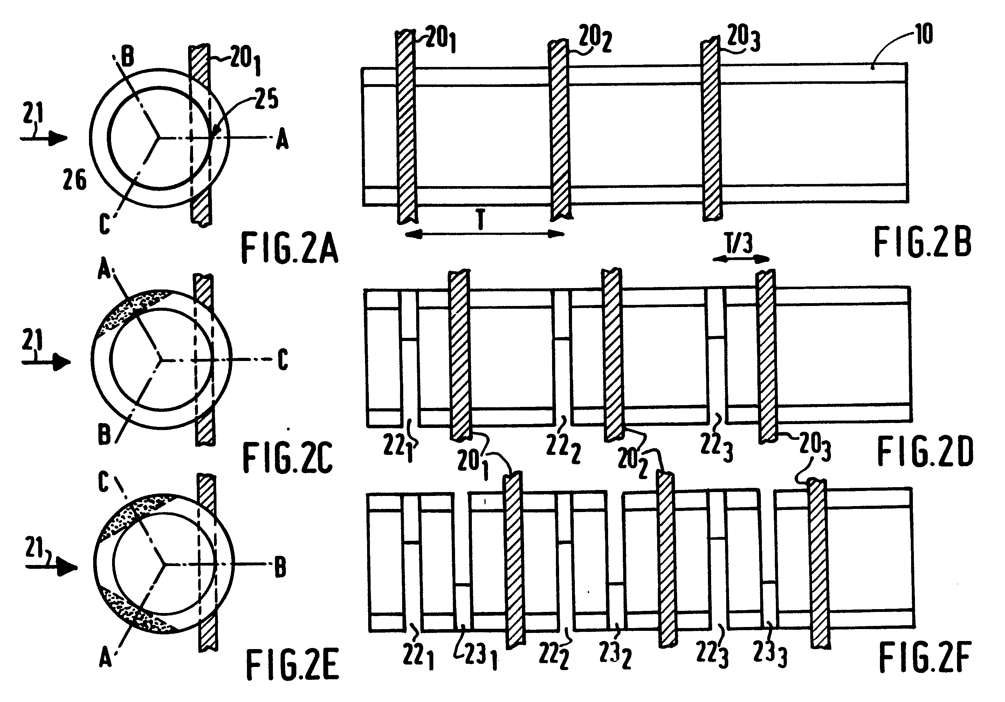

Les figures 2A à 2F représentent la méthode de réalisation de l'invention dans le cas d'un pas à trois évidements pour la simplification du dessin. On utilise pour cela une scie multifils comprenant par exemple trois fils $20_1$, $20_2$, $20_3$ distants entre eux de T. la largeur des fils est sensiblement de h. Trois découpes sont effectuées $22_1$, $22_2$, $22_3$, avec le sens de pénétration représenté par la flèche 21. Les découpes sont réalisées jusqu'à ce que les fils affleurent la paroi interne 25, c'est-à-dire après avoir traversé la totalité de la zone creuse 26 du tube cylindrique.

Afin d'obtenir un pas à trois évidements le tube est alors tourné par rapport à son axe d'un angle de $360°/3 = 120°$, la position des lettres A, B, C mettant en relief cette rotation. Les trois fils sont alors déplacés selon l'axe longitudinal du tube d'une distance T/3 et trois nouveaux évidements sont réalisés $23_1$, $23_2$, $23_3$. Les opérations de rotation et de translation analogues aux précédentes sont effectuées puis trois autres évidements sont réalisés.

Dans le cas le plus général pour un pas comprenant n évidements, le pas de rotation est de $360°/n$ et le pas de translation de chaque fils est de T/n.

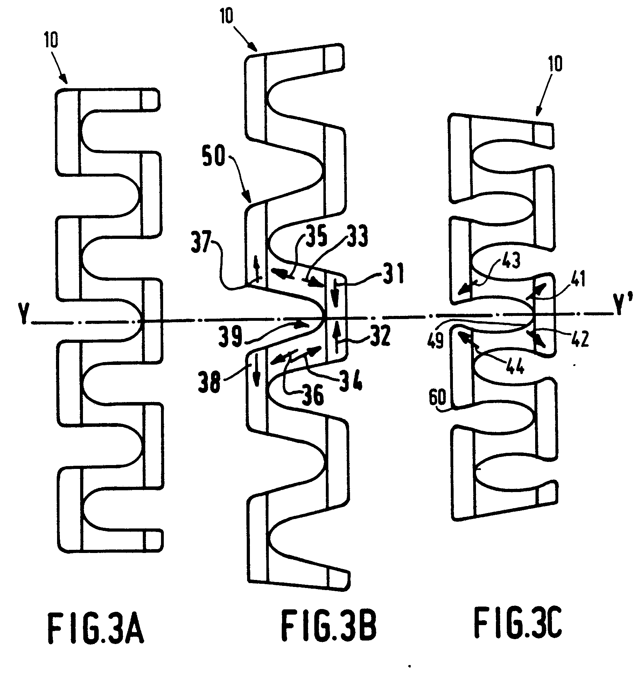

Les figures 3A à 3C représentent une coupe, selon l'axe de symétrie du tube, d'un ressort selon l'invention mais représenté pour faciliter le dessin, dans le cas d'un ressort avec un pas à deux évidements. Cette structure est très simplifiée mais permet de mieux visualiser les forces mises en oeuvre. La coupe selon la figure 3A représente une partie de ressort au repos. En considérant des déplacements se faisant par rapport à une spire centrale centrée sur l'axe YY', on obtient selon la figure 3O un ressort en élongation et selon la figure 3C un ressort en compression. Dans ces deux cas on observe sur la spire centrale les directions des forces mises en oeuvre qui sont symétriques par rapport à l'axe YY'. Les forces représentées par les flèches 31 et 33 dans la figure 3B agissent en compression sur les forces représentées par les flèches 32 et 34. Les forces représentées par les flèches 35 et 37 agissent en extension avec les forces représentées par les flèches 36 et 38. La composition de ces forces révèle qu'une structure de ressort ayant des angles vifs est moins bonne qu'une structure présentant des angles arrondis. Pour cette raison le fond de chaque évidement, par exemple 39, doit préférentiellement avoir une structure arrondie. Ceci est aisément obtenu par un découpage opéré à l'aide d'une scie à fils.

Pour les mêmes raisons les bords externes de chaque évidement, tel que 50, ont préférentiellement une structure arrondie. Ceci peut être obtenu en opérant un décapage chimique local effectué après la réalisation des évidements.

La coupe selon la figure 3C représente le même ressort dans des conditions de compression avec d'autres directions des forces 41, 42, 43 et 44 mises en oeuvre. Là aussi la structure préférentielle est celle avec des angles 49 et 60 arrondis.

Les coupes des figures 3A à 3C représentent un exemple volontairement simplifié. Les mêmes mécanismes d'équilibre de forces se présentent, mais de manière bien plus complexe, dans des ressorts selon l'invention, avec un nombre d'évidements supérieur à 2 par pas.

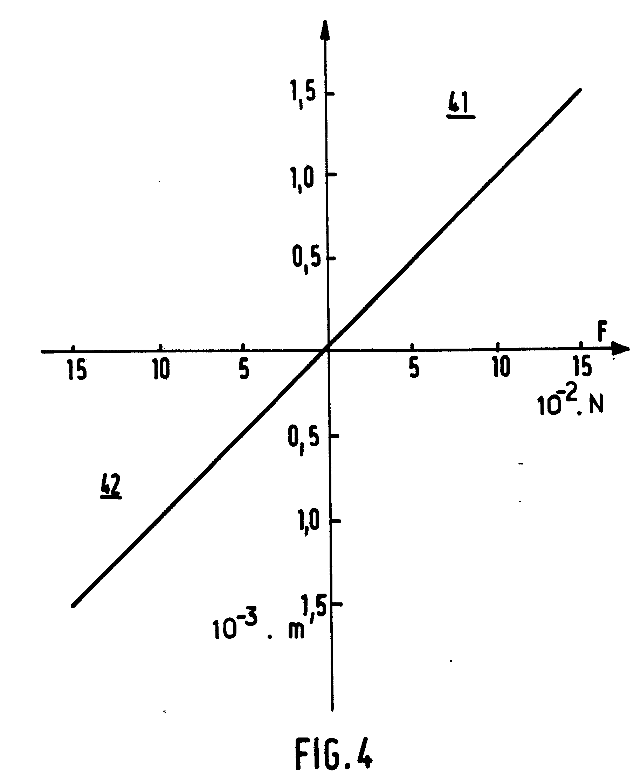

La figure 4 fournit la courbe d'élongation en compression-extension en fonction de la force appliquée pour un ressort en quartz selon l'invention. Pour un ressort ayant les caractéristiques géométriques suivantes:
. longueur: 20 mm
. nombre d'évidements: 26
. pas T = 2,25 mm
. largeur de découpe h = 0,2 mm
. distance entre découpe e = 0,548 mm
. épaisseur de la paroi du tube: 1 mm
. diamètre d = 18 mm.

La courbe d'élongation en fonction de la force est sensiblement linéaire. Sa pente est environ de $10^{-2}$ m/N. Il opère aussi bien en compression (zone 41) qu'en extension (zone 42). Ce ressort peut également supporter de faibles forces de torsion.

Le rapport entre la largeur de la découpe h et la distance $e$ entre deux découpes consécutives peut se situer sur une large gamme de valeurs selon les dimensions respectives de $h$ et $e$.

Les situations extrêmes les plus caractéristiques sont pour les faibles et les fortes valeurs de $h$ et $e$.

Pour les valeurs faibles, il est possible de réaliser un ressort avec les valeurs $h \simeq e \simeq 50$ μm pour lequel le rapport h/e est sensiblement égal à 1. Le procédé de découpe n'apporte que très peu de perturbations telles que microfractures ou autres dans la zone de découpe, ce qui permet de conserver au matériau situé entre deux évidements, une qualité intrinsèque satisfaisante pour l'application visée. En effet, pour une faible épaisseur de matériau restant, des microfractures rendraient impossible la réalisation d'un ressort.

Pour les valeurs élevées, la distance $e$ n'ayant pas de limite particulière, le choix sur la valeur $h$ peut également être très étendu. Il est possible d'utiliser des fils, munis d'abrasifs, de plusieurs millimètres de diamètre et de faire des évidements larges autorisant la réalisation de ressorts de grandes dimensions. La technique du sciage s'adapte correctement à ces conditions extrêmes et permet une réalisation économique de ressorts en matériau réfractaire non métallique.

Les ressorts en matériau réfractaire non métallique qui viennent d'être décrits peuvent être utilisés dans les applications qui nécessitent la transmission ou l'absorption de forces de faible amplitude dans des conditions de température élevée par exemple pour compenser les dilatations de pièces mobiles. Un tel ressort peut être utilisé à des températures dépassant 1000°C lorsqu'il est réalisé en quartz, en graphite ou en nitrure de bore, en conservant ses propriétés élastiques de base. Il est ainsi possible d'obtenir un ressort avec un matériau à l'état amorphe disposant de qualités analogues à un ressort métallique mais adapté aux hautes températures.

Dans ces situations de haute température il possède en outre l'intérêt de ne pratiquement pas fournir de vapeurs par évaporation de son matériau constitutif, ce qui permet de l'utiliser dans des atmosphères nécessitant de bonnes conditions de propreté.

Il peut donc être utilisé dans la mécanique des hautes températures, la métallurgie des semi-conducteurs, la transmission de mouvements sous vide à haute température...

**Revendications**

1. Procédé pour la réalisation d'un ressort de type cylindrique (10) qui présente des évidements ($11_1$ à $11_7$) non jointifs de hauteur $h$, réalisés dans un tube cylindrique creux, selon des bandes, distantes entre elles de $e$, sensiblement perpendiculaires à l'axe du tube cylindrique creux, ces évidements étant répartis dans le tube selon une disposition hélicoïdale, chaque évidement ($11_1$ à $11_7$) étant constitué par un cylindre de hauteur $h$, dont la génératrice se déplace parallèlement à l'axe du tube sur une courbe fermée formée d'une partie du contour d'une section sensiblement droite du tube cylindrique creux, comprenant une portion des contours relatifs aux faces interne et externe du tube cylindrique creux, la courbe fermée subissant, pour deux évidements voisins, une rotation par rapport à l'axe du tube cylindrique creux, caractérisé en ce que dans un tube cylindrique creux en matériau réfractaire non métallique,

- on effectue une opération de sciage partiel du tube, selon une direction correspondant à une section sensiblement droite du tube, à l'aide d'une scie à fils, ayant au moins un fil, afin de réaliser au moins un évidement partiel ($11_1$ à $11_7$) du tube, le sciage partiel étant arrêté après avoir traversé la totalité de la partie creuse du tube, la largeur du fil correspondant sensiblement à la largeur de l'évidement recherchée,

- on déplace le tube par rapport au fil de la scie, selon une rotation par rapport à l'axe du tube d'un angle de 360°/n et une translation parallèlement à l'axe du tube, d'une distance T/n, où T représente la distance entre deux évidements consécutifs situés sur une même génératrice et n le nombre d'évidements à réaliser dans le tube sur la distance T,

- on répète l'opération de sciage puis l'opération de déplacement jusqu'à l'obtention d'un ressort (10) en matériau réfractaire non métallique ayant le nombre d'évidements et la longueur recherchés.

2. Procédé pour la réalisation d'un ressort selon la revendication 1, caractérisé en ce que le matériau réfractaire non métallique est du quartz.

3. Procédé pour la réalisation d'un ressort selon la revendication 1, caractérisé en ce que le matériau réfractaire non métallique est du nitrure de bore.

4. Procédé pour la réalisation d'un ressort selon la revendication 1, caractérisé en ce que le matériau réfractaire non métallique est du graphite.

5. Procédé pour la réalisation d'un ressort selon une des revendications 1 à 4, caractérisé en ce que le rapport h/e est sensiblement égal à 1.

6. Procédé pour la réalisation d'un ressort selon une des revendications 1 à 5, caractérisé en ce que la section droite du tube cylindrique creux est annulaire.

7. Procédé pour la réalisation d'un ressort selon une des revendications 1 à 6, caractérisé en ce que le fond de chaque évidement est arrondi.

8. Ressort utilisable aux hautes températures obtenu selon le procédé de l'une des revendications 1 à 7.

**Patentansprüche**

1. Verfahren zur Herstellung einer Feder vom zylindrischen Typ (10) mit nicht aneinanderstossenden Aussparungen ($11_1$ bis $11_7$) mit einer Höhe $\underline{h}$ bei einem zylinderförmigen Hohlrohr entsprechend Bändern in einem gegenseitigen Abstand $\underline{e}$, die nahezu senkrecht auf der Achse des zylinderförmigen Hohlrohrs stehen, wobei diese Aussparungen schraubenförmig über das Rohr verteilt sind, wobei jede Aussparung ($11_1$ bis $11_7$) durch einen Zylinder mit einer Höhe $\underline{h}$ gebildet wird, dessen Mantellinie sich parallel zu der Rohrachse verschiebt und zwar über eine aus einem Teil des Umfangs eines nahezu geraden Querschnittes durch das zylinderförmige Hohlrohr gebildete geschlossene Kurve, wobei dieser Teil einen Teil der Umrisse in bezug auf die Innen- und Aussenseite des zylindeförmigen Hohlrohrs aufweist, wobei die geschlossene Kurve for zwei benachbarte Aussparungen eine Drehung gegenüber der Achse des zylinderförmigen Hohlrohrs erfährt, dadurch gekennzeichnet, dass in einem zylinderförmigen Hohlrohr aus einem feuerbeständigen nicht metallischen Werkstoff
- ein Sägevorgang durch einen Teil des Rohres durchgeführt wird, und zwar in einer Richtung entsprechend einem nahezu senkrechten Schnitt durch das Rohr mit Hilfe einer Drahtsäge mit mindestens einem Draht um mindestens eine teilweise Aussparung ($11_1$ bis $11_7$) in dem Rohr zu machen, wobei die teilweise Einsägung eingestellt wird, nachdem der ganze hohle Teil des Rohrs überquert worden ist, wobei die Breite des Drahtes der Breite der gewünschten Aussparung nahezu entspricht,
- das Rohr gegenüber dem Draht entsprechend einer Drehung gegenüber der Achse des Rohres über einen Winkelbereich von 360°/n und entsprechend einer garadlinigen Verschiebung parallel zu der Achse des Rohres über einen Abstand von T/n verschoben wird, wobei T den Abstand zwischen zwei aufeinanderfolgenden Aussparungen auf derselben Mantellinie darstellt und wobei n die Anzahl in dem Rohr über einen Abstand T anzubringenden Aussparungen darstellt,
- der Sägevorgang nach dem Verschieben wiederholt wird, bis eine Feder (10) aus feuerfestem nicht metallischem Werkstoff mit der gewünschten Anzahl Aussparungen der gewünschten Länge erhalten worden ist.

2. Verfahren zum Herstellen einer Feder nach Anspruch 1, dadurch gekennzeichnet, dass der feuerbeständige nicht metallische Werkstoff Quarz ist.

3. Verfahren zum Herstellen einer Feder nach Anspruch 1, dadurch gekennzeichnet, dass der feuerbeständige nicht metallische Werkstoff Bornitrid ist.

4. Verfahren zum Herstellen einer Feder nach Anspruch 1, dadurch gekennzeichnet, dass der feuerbeständige nicht metallische Werkstoff Graphit ist.

5. Verfahren zum Herstellen einer Feder nach einem der Ansprüche 1 bis 4, dadurch gekennzeichnet, dass das Verhältnis h/e nahezu gleich 1 ist.

6. Verfahren zum Herstellen einer Feder nach einem der Ansprüche 1 bis 5, dadurch gekennzeichnet, dass der Querschnitt durch das zylinderförmige Hohlrohr ringförmig ist.

7. Verfahren zum Herstellen einer Feder nach einem der Ansprüche 1 bis 6, dadurch gekennzeichnet, dass die Wanderung jeder Aussparung abgerundet ist.

8. Bei hohen Temperaturen verwendbare nach dem Verfahren nach einem der Ansprüche 1 bis 7 hergestellte Feder.

**Claims**

1. A method of manufacturing a spring of the cylindrical type (10) having recesses ($11_1$ to $11_7$) not adjoining each other and having a height $\underline{h}$, which are formed in a hollow cylindrical tube, spaced apart by a distance $\underline{e}$ and substantially at right angles to the axis of the hollow cylindrical tube, these recesses being distributed in the tube along a helical line, each recess ($11_1$ to $11_7$) being constituted by a cylinder having the height $\underline{h}$, whose generatrix is displaced parallel to the axis of the tube along a closed curve formed by a part of the contour of a substantially transverse section of the hollow cylindrical tube and comprising a part of the contours corresponding to the inner and outer surfaces of the hollow cylindrical tube, the closed curve being subjected for two adjacent recesses to a rotation with respect to the axis of the hollow cylindrical tube, characterized in that in a hollow cylindrical tube of a non-metallic refractory material:
- an operation of partially sawing the tube is carried out in a direction corresponding to a substantially transverse section of the tube by means of a wire saw having at least one wire in order to obtain at least one partial recess ($11_1$ to $11_7$) of the tube, the partial sawing operation being stopped after having traversed the whole hollow part of the tube, the width of the wire corresponding substantially to the required width of the recess,
- the tube is displaced with respect to the wire of the saw according to a rotation with respect to the axis of the tube through an angle of 360°/n and a translation parallel to the axis of the tube over a distance T/n, where T represents the distance between two consecutive recesses situated on the same generatrix and $\underline{n}$ represents the number of recesses to be formed in the tube over the distance T,
- the operation of sawing and then the displacement operation are repeated until a spring (10) of a non-metallic refractory material is obtained having the required number of recesses and the required length.

2. A method of manufacturing a spring as claimed in Claim 1, characterized in that the non-metallic refractory material is quartz.

3. A method of manufacturing a spring as claimed in Claim 1, characterized in that the non-metallic refractory material is boron nitride.

4. A method of manufacturing a spring as claimed in Claim 1, characterized in that the non-metallic refractory material is graphite.

5. A method of manufacturing a spring as claimed in any one of Claims 1 to 4, characterized in that the ratio h/e is substantially equal to 1.

6. A method of manufacturing a spring as claimed in any one of Claims 1 to 5, characterized in that the cross-section of the hollow cylindrical tube is annular.

7. A method of manufacturing a spring as claimed in any one of Claims 1 to 6, characterized in that the bottom of each recess is rounded.

8. A spring that can be used at high temperatures, obtained by means of the method as claimed in any one of Claims 1 to 7.

FIG.1

FIG.2A FIG.2B FIG.2C FIG.2D FIG.2E FIG.2F

FIG.3A          FIG.3B          FIG.3C

FIG.4